# EUROPEAN PATENT SPECIFICATION

(11) **EP 1 350 130 B1**
(45) Date of publication and mention of the grant of the patent: **13.06.2012**
(21) Application number: 01270798.0
(22) Date of filing: 14.12.2001
(51) Int. Cl.: G02B 6/38

(54) **METHOD AND DEVICE FOR POSITIONING AN OPTICAL CONTACT ON A CIRCUIT BOARD**
VERFAHREN UND EINRICHTUNG ZUM POSITIONIEREN EINES OPTISCHEN KONTAKTS AUF EINER LEITERPLATTE
PROCEDE ET DISPOSITIF POUR POSITIONNER UN CONTACT OPTIQUE SUR UNE CARTE A CIRCUIT IMPRIME

(30) Priority: 15.12.2000 SE 0004657
(43) Date of publication of application: 08.10.2003
(73) Proprietor: Telefonaktiebolaget LM Ericsson (publ), 164 83 Stockholm (SE)
(72) Inventor: JOHANSSON, Gilbert, S-510 22 Hyssna (SE); PETTERSSON, Mikael, S-431 37 Göteborg (SE)
(74) Representative: Vejgaard, Christian
(86) International application number: PCT/SE2001/002795
(87) International publication number: WO 2002/048774

(56) References cited:
- US-A- 4 432 604
- US-A- 4 906 197
- US-A- 5 134 679
- US-A- 5 306 159

## Description

### TECHNICAL FIELD

The present invention relates to a device and a method for positioning an optical contact on a circuit board in such a way that tolerances arising when the circuit board is plugged into a contact plane can be absorbed.

### BACKGROUND ART

Electro-optic contacts usually consist of a casing, in which there is an electro-optic cable. When connecting electro-optic contacts, it is vital that the contact is connected with great precision, both in the longitudinal direction of the cable, in other words in the direction of the beam, and in the direction transverse to the cable. When connecting electro-optic contacts to a contact plane, it has been usual to date for the electro-optic contact to be connected by hand, which has meant that problems with tolerances have been able to be reduced.

In modern systems, there is a need to mount cables and contacts for the same on circuit boards together with other electronic components, which can cause tolerance problems, in particular in the longitudinal direction of the cable, in other words in the direction of the beam, due to the circuit board usually being connected to a contact plane by being offered up to the contact plane in tracks until mechanical contact is made. Using this method, mechanical contact can be made before the electro-optic contact is sufficiently near to the corresponding optical contact in the contact plane.

US 4,906,197 describes a spring engagement mechanism for fiber optic connectors. This mechanism utilizes a large screw positioned across a circuit board. A drawback of this mechanism is that the screw occupies a relatively great deal of space, and the mechanism can thus not be used in applications which require dense packing of components. In addition, the screw is tightened manually.

US 4,432,604 discloses a self adjusting fiber optic connector assembly. One of the drawbacks of this assembly is that springs are arranged around every individual contact, making the device difficult to assemble and disassemble.

US 4,798,440 and EP 969 300 describe various devices which consist of an electro-optic contact consisting of an electro-optic cable fastened in a casing by means of a spring, whereby the contact is given a spring-loaded action. The contacts according to these documents are not intended to be attached to circuit boards and cannot be used for an electro-optic cable that is ready-assembled in a commercial casing. The devices according to these documents are, in addition, difficult to assemble and, particularly when mounted on circuit boards, would cause problems, for example when replacing the contact.

### DISCLOSURE OF THE INVENTION

There is thus a need to be able to mount an electro-optic contact on a circuit board in such a way that tolerance problems associated with connecting the circuit board to a contact plane are reduced. The tolerance problems concerned are primarily in the direction of the beam. A device that solves this problem should, in addition, preferably be able to be used with commercially available contacts, and should, in addition, make it possible to replace or release the contact quickly and easily, for example for servicing and fault-finding.

This problem is solved by the present invention in that it provides a device for positioning one or several electro-optic contacts on a circuit board in the direction of the beam, which device comprises a first part and a second part, with at least one of the parts comprising means for attachment to a circuit board, and the second part comprising the possibility of housing the electro-**ADDITIONAL SHEET**

Document US 5134679 discloses a connector Disclosed is a connector which permits optical connections between a circuit pack and backplane. The optical components are mounted on a major surface of a circuit pack near the edge. Optical fibers are mounted within a housing which is secured to the backplane. The use of springs within the housing gives sufficient tolerances so that the fibers are aligned with the components when the circuit pack is inserted within a shelf.

Document US 5306159 discloses A multiple circuit board assembly includes a service cable connector having electrical power and fiber optic input/output connector elements that connect the board to a spring mounted service module connector receptacle in a housing structure that carries the assembled stacks of printed circuit boards. To avoid misaligning forces on the pressure type edge connector node contact elements as these engage one another, the service module connector plug and receptacle are initially spaced from one another at the time of mating contact of the edge connector nodes, and a spring mounted threaded nut and screw arrangement of the plug and receptacle is caused to be resiliently engaged to enable the plug and receptacle to be drawn to one another by the threaded securing elements.

This problem is solved by the present invention in that it provides a device for positioning one or several electro-optic contacts on a circuit board in the direction of the cable, which device comprises a first part and a second part, with the first part comprising means for attachment to a circuit board, and the second part comprising the possibility of housing the electro optic contacts at a first position in the second part. The device further comprises at least one spring for letting the second part make a spring-movement in relation to the first part, which spring/-s contact a second position in the second part of the device, said second position being separate from said first position, whereby the electro-optic contact is brought along when the second part makes its spring-movement, and the electro-optic contact is positioned correctly in the direction of the cable. The optical cable connector is fastened in the second part-so that it can move together with the second part. The second part is movably mounted on the first part by means of at least one pin so that when the first part is attached to the circuit board the second part can be guided for spring-movement along the pin/-s substantially in parallel with the circuit board.

optic contact/s at a first position in the second part. The device further comprises means for letting the second part make a spring-movement in relation to the first part, which spring means contact a second position in the second part of the device, said second position being separate from said first position, whereby the electro-optic contact is brought along when the second part makes its spring-movement, and the electro-optic contact is positioned correctly in the direction of the beam.

By means of the present invention, electro-optic contacts may thus be correctly positioned in the direction of the beam automatically by means of the spring-movement, and at the same time, since the means for making the springing movement contact a position which is separate from the position of the contacts, the contacts may be installed and/or removed with great ease, since the spring means can be retained in place during the installation and/or removal.

In addition, since the shape of the springs does not need to be tailored to the shape of the contacts, the device of the invention can use standard springs together with more or less any type of contacts.

Preferably, the possibility of the second part to house the electro-optic contacts comprises a recess, the shape of which essentially corresponds to the shape of the contacts which are to be housed therein, and means for mechanically retaining the contacts in the direction of the beam.

In addition, the second part suitably has an extension in the direction of the cable which exceeds the extension of the first part in the same direction. This will serve to activate s the spring means when the device of the invention is pressed against a contact plane.

### BRIEF DESCRIPTION OF THE DRAWINGS

In the following, the invention will be described in greater detail, with reference to the attached drawings, in which
Figure 1 shows an exploded diagram of a device according to the invention, and an electro-optic contact comprising a cable, and
Figure 2 shows an assembled device according to the invention, and
Figure 3 shows an assembled device according to the invention, viewed from one principal side of the invention, and
Figure 4 shows an electro-optic contact with cable in a device according to the invention, attached to a circuit board plugged into a contact plane.

### EMBODIMENTS

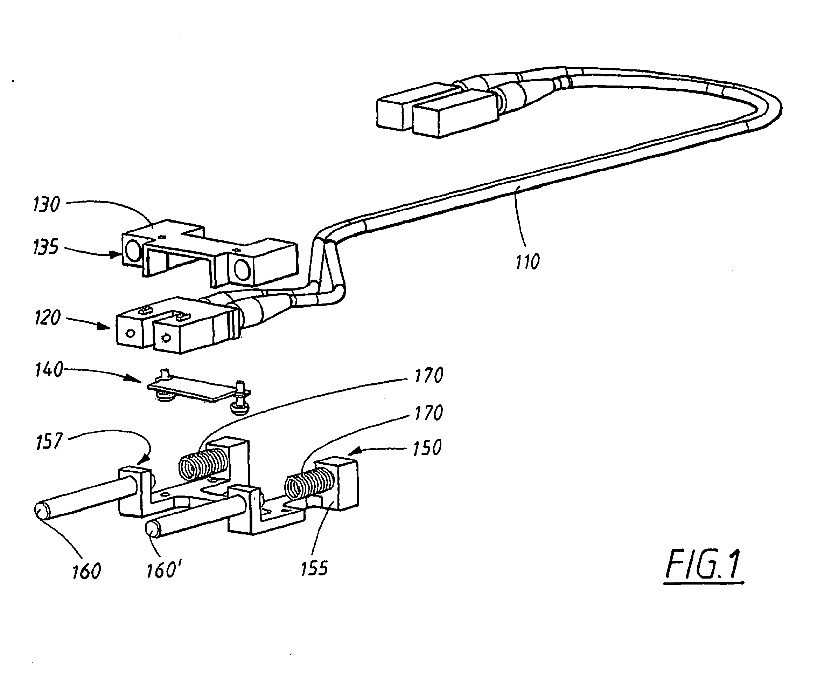

Figure 1 shows an exploded diagram of a device according to the invention, and an electro-optic cable 110 that has a standard contact 120 at both its ends. By means of the device according to the invention, the contacts 120 are able to be mounted on a circuit board that is plugged into a contact plane, a so-called back plane, with the help, for example, of tracks. On the back plane, there is a socket with an opto-contact, to which the opto-contact 120 on the cable 110 is to be connected. Due to the tolerances in the circuit board, the back plane and the tracks, the position of an opto-contact that is permanently attached to the circuit board can vary considerably in the direction of the beam when the circuit board has been plugged into the back plane, which is not acceptable.

The fact that Figure 1 shows a cable with two contacts is, of course, of no significance for the invention. The invention can be used with practically any number of contacts. The type of contact can also in principle be any type of contact, as the invention makes it possible to use commercial types of contact. Examples of such types of contact are contacts in accordance with the following standards: NTT-SC, EIA/TIA 568A or IEC 874-19.

The device according to the invention comprises a first part 130, a holder, which is shaped with room for the opto-contacts 120, and two lugs 135. The opto-contacts 120 can be fastened in the purpose-designed space in the holder by means of a plate 140.

The holder 130, with the plate 140 and the contacts 120, is arranged in a second part 150 of the device, a "cradle". The cradle 150 has two pins 160, 160', and two springs 170, 170', with each spring interacting with one of the pins. In the example shown in Figure 1, the interaction between the pins 160, 160' and the springs 170, 170' takes place by each pin running inside one of the springs. The cradle 150 has, in addition, two front shoulders 157 and two rear shoulders 155, with each of the rear shoulders 155 supporting one of the springs 170, 170', and the front shoulders 157 forming stop surfaces for the shoulders 135 on the holder 130 during the spring-loaded movement of the holder along the pins 160, 160'.

One way of mounting an opto-contact in a device according to the invention is to clamp the contacts 120 in the holder 130 by means of the plate 140. Thereafter, the holder 130 is mounted in the cradle 150 by the pins 160, 160' being inserted through purpose-designed holes in the front shoulders 157 of the cradle, through purpose-designed holes in the shoulders 135 of the holder, through the respective springs 170, 170' and finally into purpose-designed holes in the rear shoulders 155 of the cradle 150. The holes in the rear shoulders 155 of the cradle 150 through which the pins pass have a push-fit, which locks the pins in the cradle. The holes in the holder 130 through which the pins 160, 160' pass have a smaller diameter than the springs 170, 170', which means that the holder containing the contacts can move along the pins. On account of the springs, the holder and thereby the contacts will be under tension in the longitudinal direction of the cable. The fact that the pins are attached by means of a push-fit is only to be regarded as an example. There are a large number of alternative methods for attaching the pins, for example by using a threaded connection.

An alternative way of mounting the contacts in a device according to the invention is to have the device ready-assembled as far as the plate 140. The contacts 120 are thereafter inserted in the holder 130 and attached by the plate 140 being screwed fast to the cradle 150.

Thus, the springs 170,170', act on parts that are spaced apart from the recess for the contacts. This means that the device can be assembled and disassembled easily, without any need to work with those parts of the device which house the springs. In addition, it can be envisioned that the device can house an optional amount of contacts, without any need for changing the amount of springs as the number of contacts is changed.

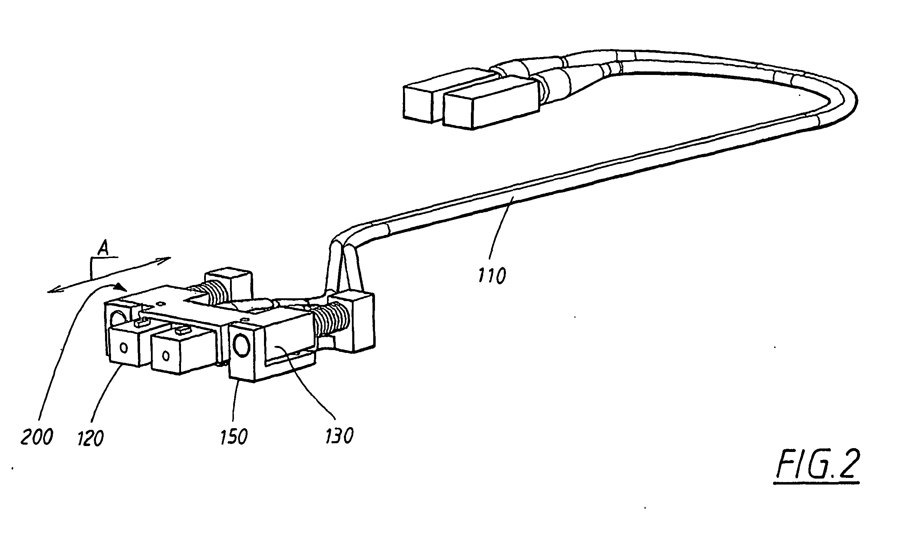

Figure 2 shows a device 200 according to the invention ready-assembled with opto-contacts 120 and associated cable 110. The drawing shows that the holder 130 and the contacts 120 fastened in this can move in the directions indicated by the arrow A, in other words in the longitudinal direction of the springs 170, which is here the same as the direction of the beam. The ready-assembled device will have two principal surfaces, and a number of edge surfaces.

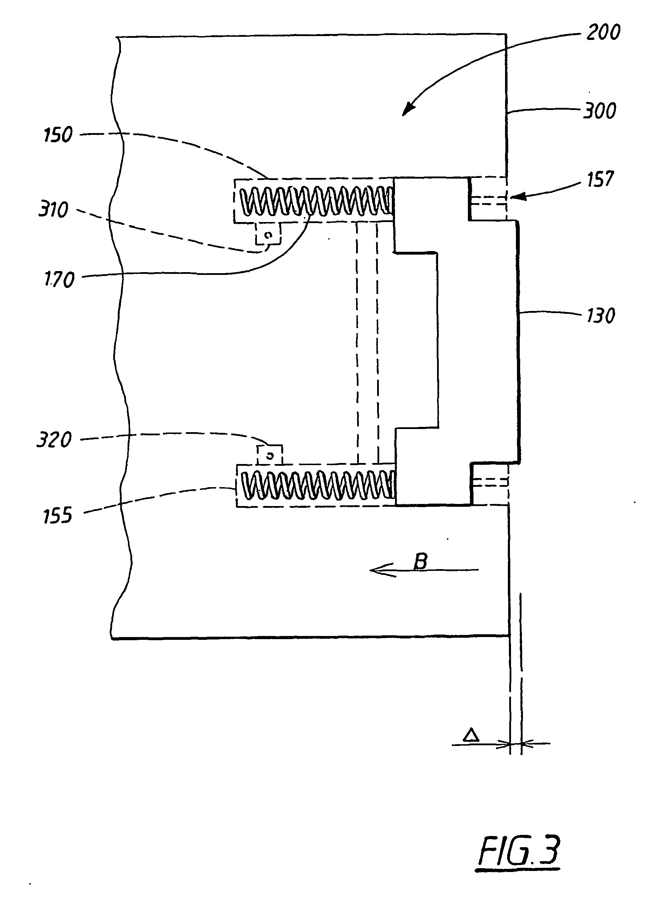

Once the device 200 is assembled, it can be fastened onto a circuit board 300, which is shown schematically in Figure 3. The device can be attached to the circuit board in a number of different ways, for example using screws which are screwed into holes 310, 320, in the device. Figure 3 also shows that, in one embodiment of a ready-assembled device 200, a part of the edge of the holder 130 projects somewhat in relation to the side of the front shoulders 157 of the cradle that is located furthest away from the rear shoulders 155 of the cradle. This "overhang" is shown by broken lines and a double arrow Δ in the drawing, and the direction of the overhang is the same as the principal direction of the cable 110. When mounted on the circuit board 300, the device 200 is attached in such a way that the side of the front shoulders 157 of the cradle that is located furthest away from the rear shoulders 155 of the cradle is level with one edge of the circuit board, which means that the projecting part Δ of the holder also projects in relation to the edge of the circuit board.

If the edge of the circuit board over which the holder projects is the edge which is inserted in a back plane, the projection Δ of the holder will cause the holder to be pressed in the direction B, in other words away from the back plane, while the springs 170, 170' will press the holder in the other direction, inwards towards the back plane, which ensures that a good contact is made in the direction of the beam between the opto-contacts (not shown in Figure 3) that are fastened in the holder and corresponding contacts in the back plane, irrespective of any tolerances that have arisen, for example as a result of the circuit board 300 having been inserted incorrectly.

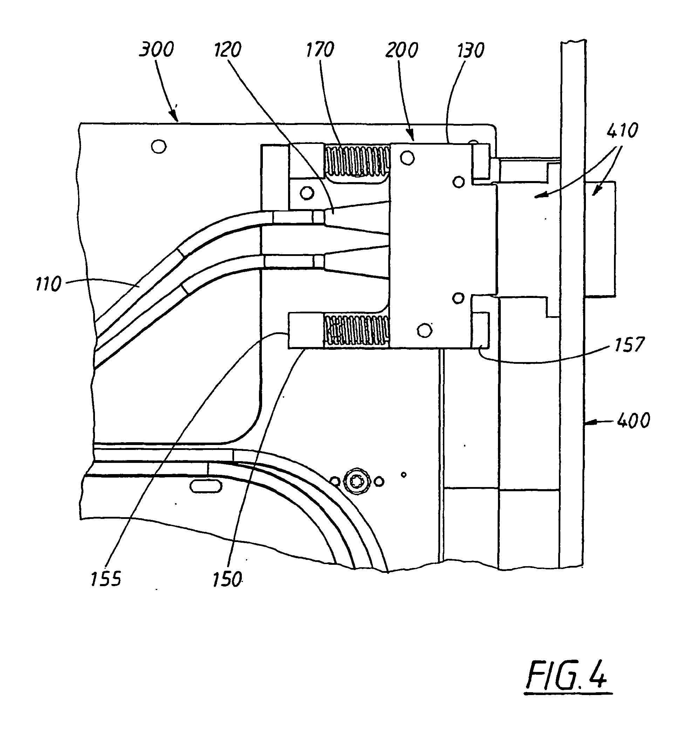

Figure 4 shows a device 200 according to the invention, attached to a circuit board 300, with cables 110 and contacts 120. The circuit board 300 has been plugged into a back plane 400, in which there is an adapter 410 for connecting the device 200 and its opto-contacts. As described above in connection with Figure 3, the back plane 400 presses the holder 130, in this case via the adapter 410, in a direction away from the back plane, which causes the springs 170 in the cradle 130 to press the holder and the opto-contacts towards the adapter 410.

As shown in Figure 4, the desired effect can be achieved without it being necessary to mount the device 200 according to the invention on the circuit board in such a way that the overhang "Δ" projects in relation to the edge of the circuit board. In principle, the device can be mounted in any position on the circuit board, provided that the contact plane or the socket on the contact plane that makes contact with the device when the circuit board is connected to the contact plane exerts a pressure on the holder 130, so that the holder is caused to move in the direction that has been defined by the arrow B in Figure 3.

As an alternative, if it is required to simplify further the possible ways of replacing the opto-contacts or accessing them in some other way, the device 200 can be mounted on a circuit board 300 with the clamp 140 facing away from the circuit board.

By means of the invention, a method is thus achieved for attaching opto-contacts onto a circuit board in such a way that good contact is made between the opto-contacts and corresponding contacts in a contact plane for the circuit board, irrespective of any tolerance problems caused, for example, by the circuit board not having been pushed sufficiently far in towards the back plane, or caused by other mechanical tolerance problems. The device according to the invention can, in addition, be used for opto-contacts of commercial type, which is a considerable simplification and reduces the costs. Opto-contacts that have been attached to a circuit board by means of a device according to the invention can, in addition, be removed or replaced in an extremely simple way, which simplifies fault-finding and other activities.

The invention is not limited to the embodiments described above, but can be varied freely within the scope of the following patent claims. The precise design of the parts of the device can be varied within the scope of the invention, provided that the principle of a fixed part and-a movable part is retained, with one part being intended to be attached to the circuit board, and the device being provided with means that mean that the second part can move spring-loaded or under tension in relation to the first part, in such a way that opto-contacts that are fastened in the device are pressed against a contact plane when the circuit board is connected to the contact plane.

## Claims

1. Device (200) for positioning one or several optical cable connectors (120) on a circuit board in the longitudinal direction of the cable (110), which device comprises a first part (150) and a second part (130), in that
the first part (150) comprises means for attachment to a circuit board (300),
- in that the second part (130) comprises a means for housing the optical cable connectors (120) at a first position in the second part, with the device further comprising
- at least one spring (170,170') for letting the second part (130) make a spring movement in relation to the first part (150), which spring/-s contact a second position in the second part of the device, said second position being separate from said first position, whereby
the optical cable connector (120) is moved when the second part (130) makes its spring-movement, and the optical cable connection (120) is positioned correctly in the longitudinal direction of the cable (110),
**characterized in that**
the optical cable connector (120) is fastened in the second part so that it can move together with the second part (130),
the second part (130) is movably mounted on the first part (150) by means of at least one pin (160,160') so that when the first part is attached to the circuit board (300) the second part is guided by spring-movement along the pin/-s substantially in parallel with the circuit board (300).

2. Device according to claim 1, in which the possibility of the second part (130) to house the optical cable connector (120) comprises a recess the shape of which essentially corresponds to the shape of the contacts which are to be housed therein, and means for mechanically retaining the contacts in the direction of the cable.

3. Device according to any of the claims 1 - 2, in which the second part has an extension in the direction of the cable which exceeds the extension of the first part in the same direction.

4. Device according to any of the preceding claims, in which the device comprises at least one hole in the second part (130) through which runs at least one pin (160), and on this pin at least one spring (170,170'), with the pin springing against a shoulder on the first part and a shoulder on the second part (130), so that the spring means contact a second position of the second part of the device.

## Patentansprüche

1. Vorrichtung (200) zum Positionieren eines oder mehrerer optischer Kabelverbinder (120) auf einer Leiterplatte in der Längsrichtung des Kabels (110), wobei die Vorrichtung einen ersten Teil (150) und einen zweiten Teil (130) umfasst, wobei
- der erste Teil (150) Mittel zur Befestigung an einer Leiterplatte (300) umfasst,
- der zweite Teil (130) ein Mittel zum Aufnehmen der optischen Kabelverbinder (120) an einer ersten Position im zweiten Teil umfasst, wobei die Vorrichtung ferner umfasst:
- mindestens eine Feder (170, 170'), um den zweiten Teil (130) eine Federbewegung in Bezug auf den ersten Teil (150) machen zu lassen, wobei die Feder(n) eine zweite Position im zweiten Teil der Vorrichtung berühren, wobei die zweite Position von der ersten Position getrennt ist, wodurch
der optische Kabelverbinder (120) bewegt wird, wenn der zweite Teil (130) seine Federbewegung macht, und der optische Kabelverbinder (120) korrekt in der Längsrichtung des Kabels (110) positioniert wird,
**dadurch gekennzeichnet, dass**
der optische Kabelverbinder (120) im zweiten Teil fixiert wird, so dass er sich zusammen mit dem zweiten Teil (130) bewegen kann,
der zweite Teil (130) mittels mindestens eines Stifts (160, 160') auf dem ersten Teil (150) beweglich angebracht ist, so dass, wenn der erste Teil auf der Leiterplatte (300) befestigt wird, der zweite Teil durch Federbewegung entlang des Stifts bzw. der Stifte im wesentlichen parallel zur Leiterplatte (300) geführt wird.

2. Vorrichtung nach Anspruch 1, wobei die Fähigkeit des zweiten Teils (130), den optischen Kabelverbinder (120) aufzunehmen, umfasst: eine Aussparung, deren Form im wesentlichen der Form der Kontakte entspricht, die darin aufzunehmen sind, und Mittel zum mechanischen Festhalten der Kontakte in der Richtung des Kabels.

3. Vorrichtung nach einem der Ansprüche 1 - 2, wobei der zweite Teil eine Ausdehnung in der Richtung des Kabels hat, welche die Ausdehnung des ersten Teils in der gleichen Richtung übersteigt.

4. Vorrichtung nach einem der vorhergehenden Ansprüche, wobei die Vorrichtung umfasst: mindestens ein Loch im zweiten Teil (130), durch das mindestens ein Stift (160) läuft, und auf diesem Stift mindestens eine Feder (170, 170'), wobei der Stift gegen einen Vorsprung auf dem ersten Teil und einen Vorsprung auf dem zweiten Teil (130) federt, so dass die Federmittel eine zweite Position des zweiten Teils der Vorrichtung berühren.

## Revendications

1. Dispositif (200) pour positionner un ou plusieurs connecteurs de câbles optiques (120) sur une carte à circuit imprimé dans le sens longitudinal du câble (110), lequel dispositif comprend une première partie (150) et une seconde partie (130)
- la première partie (150) comprenant des moyens de fixation à une carte à circuit imprimé (300),
- la seconde partie (130) comprenant des moyens pour loger les connecteurs de câbles optiques (120) dans une première position à l'intérieur de la seconde partie, le dispositif comportant en outre
- au moins un ressort (170, 170') permettant à la seconde partie (130) de réaliser un mouvement de ressort relativement à la première partie (150), lequel/lesquels ressort(s) vient/viennent en contact avec une seconde position dans la seconde partie du dispositif, ladite seconde position étant séparée de ladite première position, moyennant quoi
le connecteur de câble optique (120) est déplacé lorsque la seconde partie (130) effectue son mouvement de ressort et la connexion à câble optique (120) est correctement positionnée dans le sens longitudinal du câble (110),
**caractérisé en ce que**
le connecteur à câble optique (120) est fixé dans la seconde partie de telle sorte qu'il puisse se déplacer conjointement à la seconde partie (130),
la seconde partie (130) est fixée de manière mobile à la première partie (150) au moyen d'au moins une broche (160, 160') de sorte que, lorsque la première partie est fixée à la carte à circuit imprimé (300), la seconde partie soit guidée par le mouvement de ressort le long de la/des broche(s) de manière sensiblement parallèle à la carte à circuit imprimé (300).

2. Dispositif selon la revendication 1, dans lequel le logement du connecteur de câble optique (120) par la seconde partie (130) comprend une cavité dont la forme correspond essentiellement à la forme des contacts qui doivent être logés à l'intérieur et des moyens pour maintenir mécaniquement les contacts dans le sens du câble.

3. Dispositif selon l'une quelconque des revendications 1 à 2, dans lequel la seconde partie comporte une saillie, en direction du câble, qui dépasse la saillie de la première partie dans la même direction.

4. Dispositif selon l'une quelconque des revendications précédentes, dans lequel le dispositif comprend au moins un trou dans la seconde partie (130) à travers lequel s'étend au moins une broche (160) et, sur cette broche, au moins un ressort (170, 170'), la broche rebondissant contre un épaulement de la première partie et un épaulement de la seconde partie (130) de telle sorte que les moyens à ressort viennent en contact avec une seconde position de la seconde partie du dispositif.
